Europäisches Patentamt

European Patent Office

Office européen des brevets

(11) Publication number: **0 120 686**
**B1**

# (12) EUROPEAN PATENT SPECIFICATION

(45) Date of publication of patent specification: **28.01.87**

(21) Application number: **84301957.1**

(22) Date of filing: **22.03.84**

(51) Int. Cl.⁴: **F 16 H 37/02**

(54) **Infinitely variable belt-drive transmission.**

(30) Priority: **23.03.83 JP 48402/83**

(43) Date of publication of application:
**03.10.84 Bulletin 84/40**

(45) Publication of the grant of the patent:
**28.01.87 Bulletin 87/05**

(84) Designated Contracting States:
**DE FR GB NL**

(56) References cited:
**EP-A-0 064 612**
**GB-A-2 025 545**
**GB-A-2 090 348**
**GB-A-2 092 246**

**PATENTS ABSTRACTS OF JAPAN, vol. 7, no.
74(M-203)(1219), 26th March 1983**

(73) Proprietor: **FUJI JUKOGYO KABUSHIKI KAISHA
7-2 Nishishinjuku 1-chome Shinjuku-ku
Tokyo (JP)**

(72) Inventor: **Makishima, Sadao
725 Nobe
Akigawa-shi Tokyo (JP)**

(74) Representative: **Eyles, Christopher Thomas et al
BATCHELLOR, KIRK & EYLES 2 Pear Tree Court
Farringdon Road
London, EC1R 0DS (GB)**

**Description**

The present invention relates to an infinitely variable transmission for a vehicle utilising a belt driven pulley device.

Although, in such a transmission, the transmission ratio is continuously changed, a selector device is needed in order to select forward drive, reverse drive, or neutral. For that purpose, U.S. Patent 4,304,150 discloses an infinitely variable belt-drive transmission having a selector device at the output shaft of the transmission comprising a selector sleeve forming part of a double dog clutch. In order to engage the dog clutch with a corresponding gear wheel, the engine must be stopped; otherwise double-clutching must be performed. Either procedure is troublesome. However, it has been impossible to provide a synchromesh mechanism in the selector device, because the infinitely variable transmission as a whole has great inertial mass.

JP—A—57-129955 discloses a selector device which includes a planetary gear device and an hydraulic clutch and which is provided at the input shaft of the transmission. However, the device is very complicated in construction and is expensive. In addition, the length of the engine including the transmission becomes large, which is detrimental to the mounting of the transmission in a vehicle.

GB—A—2090348 discloses an infinitely variable belt drive transmission in which power is transmitted from the engine to the belt transmission for forward and reverse drive through comparatively large intermediate gears which produce unwanted noise during rotation.

An object of the present invention is to provide an infinitely variable transmission which can be small in size and can be easily manipulated.

The invention is concerned with an infinitely variable belt-drive transmission for a vehicle including a clutch having a driven member for transmitting engine power to driven wheels of the vehicle; an input shaft operatively connected to the driven member; a drive pulley and a driven pulley, each having a hydraulically shiftable disc and a hydraulic cylinder for shifting the disc; a main shaft operatively connected to the drive pulley; a belt engaging with both pulleys; and a synchronism mechanism operatively connected between the input shaft and the main shaft establishing forward and reverse drive transmission. The transmission is characterised in that the input shaft and the main shaft are disposed coaxially and in that the synchronism mechanism comprises a drive gear secured to the input shaft; a synchroniser secured to the main shaft and including a driven gear and a synchronising sleeve engageable with splines on the drive gear to establish forward drive transmission; a counter gear having a first gear wheel engaged with the drive gear and a second gear; and an idler gear engageable with the driven gear and the second gear of the counter gear to establish reverse drive transmission.

The invention will be more readily understood by way of example from the following description of an infinitely variable transmission in accordance therewith, reference being made to the accompanying drawings, in which:

Figure 1 is a schematic sectional view of the transmission; and

Figure 2 is a sectional view of a selector device in the transmission of Figure 1, the upper and lower parts being taken on section lines which are acutely inclined to one another.

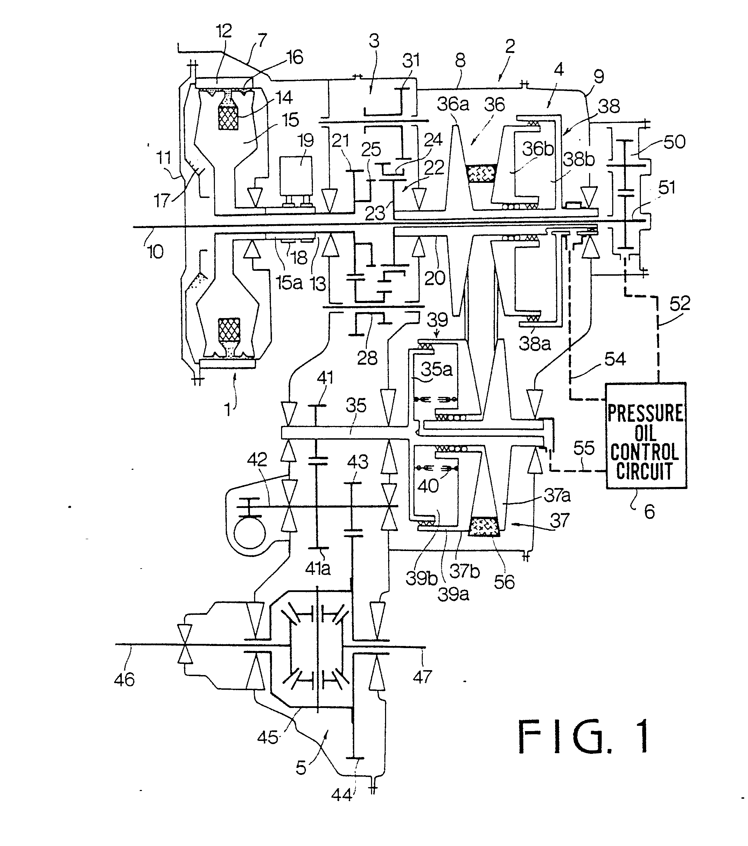

The infinitely variable belt-drive automatic transmission for a vehicle of Figure 1 comprises an electromagnetic powder clutch 1, an infinitely variable belt-drive transmission 2, a selector device (synchronism mechanism) 3, pulleys and belt device 4, final reduction device 5, and pressure oil control circuit 6. The electromagnetic powder clutch 1 is located in a housing 7, and the selector device 3 and pulleys and belt device 4 are provided in a main housing 8 and a side housing 9. A crankshaft 10 of an engine (not shown) is connected to an annular drive member 12 through a drive plate 11 of the electromagnetic powder clutch 1.

The electromagnetic powder clutch comprises a driven member 15 in which there is a coil 14. The driven member 15 has its outer periphery spaced from the inner periphery of the drive member 12 by a gap 16, and a powder chamber 17 filled with powder of magnetic material is defined between the drive member 12 and driven member 15. The driven member 15 is secured to an input shaft 13 of the belt-drive transmission. A holder 15a secured to the driven member 15 carries slip rings 18 which are electrically connected to the coil 14. The coil 14 is supplied through brushes 18 and slip rings 19 with current from a control circuit for the electromagnetic powder clutch.

When the magnetizing coil 14 is excited by clutch current, driven member 15 is magnetized to produce a magnetic flux passing through the drive member 12. The magnetic powder is aggregated in the gap 16 by the magnetic flux and the driven member 15 is engaged with the drive member 12 by the powder. On the other hand, when the clutch current is cut off, the drive and driven members 12 and 15 are disengaged from one another.

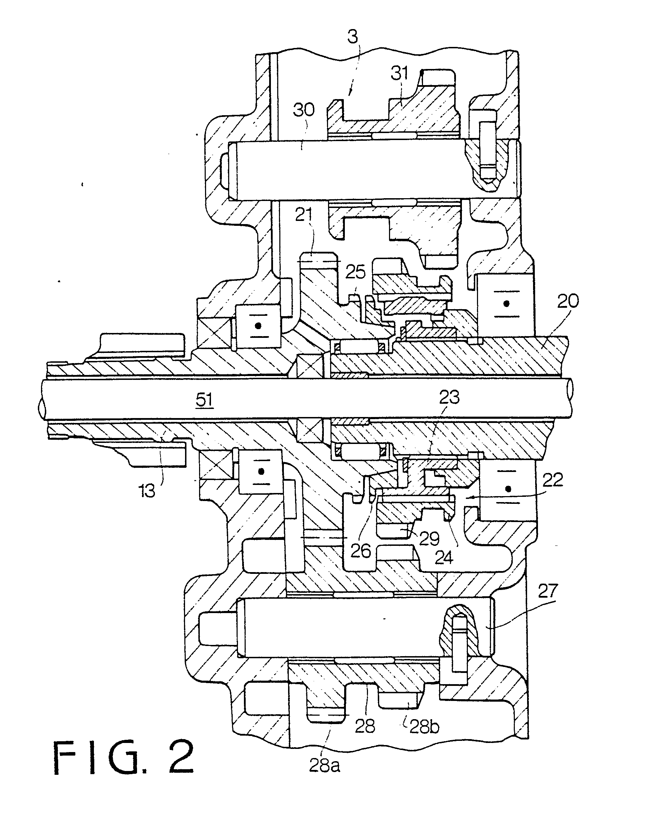

In the belt-drive transmission 2, the selector device 3 is provided between the input shaft 13 and a main shaft 20. The main shaft 20 is cylindrical and is disposed coaxially with the input shaft 13. As better shown in Figure 2, the selector device 3 comprises a drive gear 21 integral with input shaft 13 and a synchroniser 22 mounted on the main shaft 20.

The synchroniser 22 comprises a hub 23 secured to the main shaft 20, a synchroniser sleeve 24 slidably splined to the hub 23, and a synchroniser ring 26. The synchroniser sleeve 24, on being moved axially from the neutral position shown, can engage with splines 25 on drive gear 21. Drive gear 21 meshes with a first gear 28a of a counter gear 28 rotatably mounted on a shaft 27. Another second gear 28b of the counter gear is axially aligned with a driven gear 29 formed on the periphery of the sleeve 24, when the sleeve is in the neutral position. An idler gear 31 rotatably and slidably mounted on a shaft 30 can mesh gear 29 and gear 28b, when both the gear 29 is in the neutral position and idler gear 31 is in a corresponding axial position.

Reverting to Figure 1, the main shaft 20 has an axial passage in which is mounted an oil pump driving shaft 51 connected to crankshaft 10. An output shaft 35 is journalled parallel with main shaft 20. A drive pulley 36 and a driven pulley 37 are mounted on shafts 20 and 35. An axially fixed conical disc 36a of the drive pulley 36 is secured to main shaft 20 and an axially movable conical disc 36b is axially slidably mounted on main shaft 20. The movable conical disc 36b also slides in a cylinder 38a secured to the main shaft 20 to form a hydraulic device 38. A chamber 38b of the hydraulic device 38 communicates with a gear pump 50 through a passage 54, the pressure oil control circuit 6, and a passage 52. The gear pump 50 is driven by the shaft 51.

A fixed conical disc 37a of the driven pulley 37 is formed on the output shaft 35 opposite the movable disc 36b and a movable conical disc 37b is slidably mounted on the shaft 35 opposite disc 36a. Movable conical disc 37b has a cylindrical portion 39a in which a cylindrical portion 35a of the output shaft 35 is slidably engaged to form a hydraulic device 39. A chamber 39b of the hydraulic device 39 is communicated with the oil pump 50 through a passage 55 and pressure oil control circuit 6 and passage 52. A drive belt 56 engages with the drive pulley 36 and the driven pulley 37.

Secured to the output shaft 35 is a drive gear 41 which engages with an intermediate reduction gear 41a on an intermediate shaft 42. An intermediate gear 43 secured to shaft 42 engages with a final gear 44. Rotation of the final gear 44 is transmitted to axles 46 and 47 of the vehicle driving wheels through a differential 45.

The pressure oil control circuit 6 is responsive to vehicle speed, engine speed and throttle valve position for controlling the pressure oil supply to chambers 38b and 39b, thereby to move discs 36b and 37b. Thus, the transmission ratio is infinitely varied according to the conditions of the vehicle and engine.

In the operation of the selector device 3 of Figure 2, at the neutral position where the sleeve 24 is not engaged with either splines 25 or gear 31, no engine power is transmitted to main shaft 20. When the sleeve 24 is shifted to the left, synchroniser ring 26 effects synchronisation between shafts 13 and 20, and then input shaft 13 is positively connected to main shaft 20 through the engagement of sleeve 24 with splines 25. Forward drive transmission is thus established. The shifting of the sleeve can be done during the driving of the vehicle because of the synchronisation by the synchroniser 22. Since the inertial mass of drive gear 21, counter gear 28 and driven member 15 is smaller than the total mass of the pulleys and belt device and the selector device which is conventionally disposed at the output shaft of the transmission, synchronisation is performed without difficulty, i.e. the selector level for the selector device can be manipulated with ease.

While the vehicle is stationary, shifting of idler gear 31 from the position shown to align with the neutral position of the gear 29 of synchronizer sleeve 24 results in gear 31 meshing with both gear 29 and gear 28b. Accordingly, power is transmitted from the input shaft 13 to the main shaft 20 through gears 21, 28a, 28b, 31 and 29, so that shaft 20 is rotated in reverse and reverse drive transmission is established.

While the presently preferred embodiment of the invention has been shown and described, it is to be understood that this disclosure is for the purpose of illustration and that various changes and modifications may be made without departing from the spirit and scope of the invention as set forth in the appended claim.

## Claims

1. An infinitely variable belt-drive transmission for a vehicle including a clutch (1) having a driven member (15) for transmitting engine power to driven wheels of the vehicle; an input shaft (13) operatively connected to the driven member (15); a drive pulley (36) and a driven pulley (37), each having a hydraulically shiftable disc (36b, 37b) and a hydraulic cylinder (38a, 35a) for shifting the disc; a main shaft (20) operatively connected to the drive pulley (36); a belt (56) engaging with both pulleys (36, 37); and a synchronism mechanism operatively connected between the input shaft (13) and the main shaft (20) establishing forward and reverse drive transmission characterised in that the input shaft (13) and the main shaft (20) are disposed coaxially and said synchronism mechanism comprises a drive gear (21) secured to the input shaft (13); a synchroniser (22) secured to the main shaft (20) and including a driven gear (29) and a synchronising sleeve (24) engageable with splines (25) on the drive gear (21) to establish forward drive transmission; a counter gear (28) having a first gear (28a) engaged with the drive gear (21) and a second gear (28b); and an idler gear (31) engageable with the driven gear (29) and the second gear (28b) of the counter gear (28) to establish reverse drive transmission.

2. The infinitely variable belt-drive transmission according to claim 1, wherein the driven gear (29) is formed on the periphery of the synchronising sleeve (24).

3. The infinitely variable belt-drive transmission according to claim 2, wherein the driven gear (29) is axially aligned with the second gear (28b) when the synchronising sleeve (24) is not engaged with the splines (25) of the drive gear (21).

## Patentansprüche

1. Ein stufenlos regelbares Riementrieb-Getriebe für ein Fahrzeug mit einer Kupplung (1) mit einem Abtriebsteil (15) zur Übertragung von Motorkraft auf Antriebsräder des Fahrzeugs, einer an das Abtriebsteil (15) betriebsmäßig angeschlossenen Eingangswelle (13), einer Antriebsriemenscheibe (36) und einer Abtriebsriemenscheibe (37), die jeweils eine hydraulisch verschiebbare Scheibe (36b, 37b) und einen hydraulischen Zylinder (38a, 35a) zur Verschiebung der Scheibe haben, einer an die Antriebsriemenscheibe (36) betriebsmäßig angeschlossenen Hauptwelle (20), einem mit beiden Riemenscheiben (36, 37) in Eingriff befindlichen Riemen (56) und einem zwischen der Eingangswelle (13) und der Hauptwelle (20) betriebsmäßig angeschlossenen Gleichlaufmechanismus, durch den ein Vorwärts- und Rückwärtsantrieb übertragen wird, dadurch gekennzeichnet, daß die Eingangswelle (13) und die Hauptwelle (20) koaxial angeordnet sind und der Gleichlaufmechanismus ein auf der Eingangswelle (13) angebrachtes Antriebszahnrad (21), ein auf der Hauptwelle (20) angebrachtes Gleichlaufgerät (22) mit einem Abtriebszahnrad (29) und einer zwecks Übertragung von Vorwärtsantrieb mit Keilen (25) auf dem Antriebszahnrad (21) in Eingriff bewegbaren Gleichlaufhülse (24), ein Gegenzahnrad (28) mit einem ersten, mit dem Antriebszahnrad (21) in Eingriff befindlichen Zahnrad (28a) und einem zweiten Zahnrad (28b), und ein mit dem Abtriebszahnrad (29) und dem zweiten Zahnrad (28b) des Gegenzahnrads (28) zwecks Übertragung von Rückwärtsantrieb in Eingriff bewegbares Zwischenzahnrad (31) umfaßt.

2. Das stufenlos regelbare Riementrieb-Getriebe nach Anspruch 1, bei dem das Abtriebszahnrad (29) auf dem Umfang der Gleichlaufhülse (24) ausgebildet ist.

3. Das stufenlos regelbare Riementrieb-Getriebe nach Anspruch 2, bei dem das Abtriebszahnrad (29) auf das zweite Zahnrad (28b) axial ausgerichtet ist, wenn die Gleichlaufhülse (24) nicht mit den Keilen (25) des Antriebszahnrades (21) in Eingriff ist.

## Revendications

1. Mécanisme de transmission à courroie à rapport variable en continu qui comporte un accouplement (1) ayant un organe mené (15) pour transmettre l'énergie du moteur aux roues motrices du véhicule; un arbre d'entrée (13) effectivement relié à l'organe mené (15); une poulie menante ou motrice (36) et une poulie menée (37), ayant chacune un disque mobile par voie hydraulique (36b, 37b) et un cylindre hydraulique (38a, 35a) pour déplacer ce disque; un arbre principal (20) effectivement relié à la poulie motrice (36); une courroie (56) passant autour des deux poulies (36, 37); et un mécanisme de synchronisation monté effectivement entre l'arbre d'entrée (13) et l'arbre principal (20) qui établit la marche avant et la marche arrière de la transmission, caractérisé en ce que l'arbre d'entrée (13) et l'arbre principal (20) sont disposés coaxialement et en ce que ledit mécanisme de synchronisation comprend un pignon menant (21) fixé à l'arbre d'entrée (13) un synchroniseur (22) fixé à l'arbre principal (20) et incluant un pignon mené (29) et un manchon de synchronisation (24) pouvant engréner avec des cannelures (25) du pignon menant (21) afin d'établir la marche avant de la transmission; un contre-pignon (28) ayant un premier pignon (28a) engrénant avec le pignon menant (21), et un second pignon (28b); et un pignon libre (31) pouvant engréner avec le pignon mené (29) et le second pignon (28b) du contre-pignon (28) pour établir la marche arrière de la transmission.

2. Mécanisme de transmission selon la revendication 1, caractérisé en ce que le pignon mené (29) est formé sur le pourtour du manchon de synchronisation (24).

3. Mécanisme de transmission selon la revendication 2, caractérisé en ce que le pignon mené (29) est aligné axialement avec le second pignon (28b) quand le manchon de synchronisation (24) n'engrène pas avec les cannelures (25) du pignon menant (21).

FIG. 1

FIG. 2